# EUROPÄISCHE PATENTSCHRIFT

(11) **EP 1 984 601 B1**
(45) Veröffentlichungstag und Bekanntmachung des Hinweises auf die Patenterteilung: **18.11.2015**
(21) Anmeldenummer: 07711533.5
(22) Anmeldetag: 14.02.2007
(51) Int. Cl.: F01D 17/16, F02C 6/12

(54) **TURBOLADER MIT VERSTELLBAREN LEITSCHAUFELN, SCHAUFELHEBEL UND VERSTELLRING DAFÜR**
TURBOCHARGER COMPRISING ADJUSTABLE GUIDE BLADES, BLADE LEVER AND ADJUSTING RING THEREFOR
TURBOCOMPRESSEUR POURVU D'AUBES DIRECTRICES RÉGLABLES, D'UN LEVIER D'AUBES ET D'UNE BAGUE DE RÉGLAGE À CET EFFET

(30) Priorität: 16.02.2006 DE 102006007318
(43) Veröffentlichungstag der Anmeldung: 29.10.2008
(73) Patentinhaber: BorgWarner, Inc., Auburn Hills, MI 48326-2872 (US)
(72) Erfinder: TRIES, Timo, 67659 Kaiserslautern (DE); BÖNING, Ralf, 67829 Reiffelbach (DE)
(74) Vertreter: Hoefer & Partner Patentanwälte mbB
(86) Internationale Anmeldenummer: PCT/EP2007/001292
(87) Internationale Veröffentlichungsnummer: WO 2007/093407

(56) Entgegenhaltungen:
- EP-A- 1 391 585
- EP-A- 1 635 040
- EP-A1- 1 357 255
- DE-A1- 10 238 412
- DE-A1-102004 023 209
- US-A- 2 860 827

## Beschreibung

Die Erfindung betrifft einen Turbolader gemäß dem Oberbegriff des Anspruches 1.

Ein derartiger Turbolader ist aus der EP 1 357 255 A1 bekannt. Zur Vermeidung von Lagerelementen, wie Kugeln oder Stiften zwischen dem Schaufellagerring und dem Verstellring, schlägt diese Druckschrift Schaufelhebel vor, die beidseits des Schaufelkopfes Lagerflächen aufweisen, die sich bei einer Ausführungsform an Gegenflächen des Verstellringes abstützen.

Zum Stand der Technik wird ferner auf die DE 10 2004 023 209 A1, die DE 102 38 412 A1, die EP-A-1 301 585 und die US-A-2 860 827 verwiesen.

Es ist demgegenüber Aufgabe der vorliegenden Erfindung, einen Turbolader der im Oberbegriff des Anspruches 1 angegebenen Art zu schaffen, der eine weitere Vereinfachung des Aufbaues des Leitgitters bzw. Leitapparates ermöglicht.

Die Lösung dieser Aufgabe erfolgt durch die Merkmale des Anspruchs 1.

Die erfindungsgemäße Ausbildung ermöglicht eine Verstellung der Schaufelhebel bzw. Leitschaufeln in der gleichen Ebene, in der auch die radiale Lagerung des Verstellringes erfolgt. Durch diese eine Ebene wird eine kostengünstige Möglichkeit einer wälzkörperlosen Ausbildung des Leitgitters bzw. Leitapparates des erfindungsgemäßen Turboladers realisiert, da die Herstellung der Schaufelhebel und Verstellringe in lediglich einer Ebene erfolgt.

Insbesondere wird durch eine ungleichmäßige Teilung des Verstellringes, die eine ungleichmäßige Verteilung der Eingriffsausnehmungen darstellt, bewirkt, dass sich der Verstellring in allen Betriebspunkten über einen oder mehrere Hebel abstützen kann.

Ferner wird durch eine leichte Verdrehung der Verstellhebel zueinander gewährleistet, dass sich theoretisch alle Verstellhebel für bis zu 35° Auslenkwinkel bei Schaufelmittelstellung im Eingriff befinden.

Der Unteranspruch hat eine vorteilhafte Weiterbildung der Erfindung zum Inhalt.

Die Stellung des Hebelkopfes zur Schaufel ist für alle Schaufeln, mindestens paarweise, unterschiedlich, so dass die Hebel in unterschiedlichen Winkelstellungen an der Schaufelwelle befestigt, insbesondere angeschweißt, werden.

In Anspruch 3 ist ein Verstellring als jeweils selbstständig handelbares Objekt definiert.

Weitere Einzelheiten, Vorteile und Merkmale der Erfindung ergeben sich aus nachfolgender Beschreibung eines Ausführungsbeispiels anhand der Zeichnung. Es zeigt:
- Fig. 1: eine geschnittene perspektivische Darstellung des grundsätzlichen Aufbaues eines erfindungsgemäßen Turboladers;
- Fig. 2: eine perspektivische Darstellung eines erfindungsgemäßen Schaufelhebels;
- Fig. 3: eine Draufsicht auf einen Verstellring des erfindungsgemäßen Turboladers;
- Fig. 4: eine Draufsicht auf eine montierte Anordnung eines Leitgitters des erfindungsgemäßen Turboladers;
- Fig. 5: eine vergrößerte Detaildarstellung des Leitgitters gemäß Fig. 4; und
- Fig. 6-8: Draufsichten auf das Leitgitter des erfindungsgemäßen Turboladers in unterschiedlichen Leitschaufelstellungen.

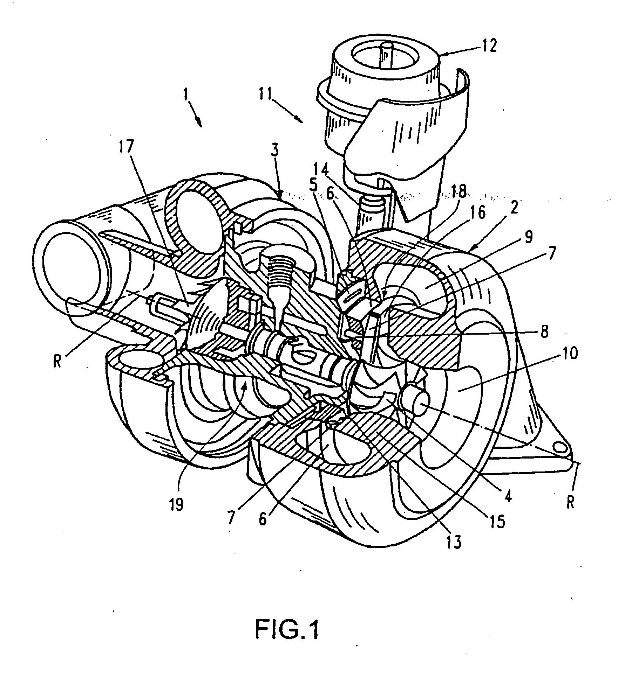

In Fig. 1 ist ein erfindungsgemäßer Turbolader 1 dargestellt, der ein Turbinengehäuse 2 und ein damit über ein Lagergehäuse 19 verbundenes Kompressorgehäuse 3 aufweist. Die Gehäuse 2, 3 und 19 sind entlang einer Rotationsachse R angeordnet. Das Turbinengehäuse 2 ist teilweise im Schnitt gezeigt, um die Anordnung eines Schaufellagerrings 6 als Teil eines radial äußeren Leitgitters 18 zu verdeutlichen, das eine Mehrzahl von über den Umfang verteilten Leitschaufeln 7 mit Schwenkachsen bzw. Schaufelwellen 8 aufweist. Hierdurch werden Düsenquerschnitte gebildet, die je nach der Lage der Leitschaufeln 7 größer oder kleiner sind und den in der Mitte an der Rotationsachse R gelagerten Turbinenrotor 4 mehr oder weniger mit dem über einen Zuführkanal 9 zugeführten und über einen Zentralstutzen 10 abgeführten Abgas eines Motors beaufschlagen, um über den Turbinenrotor 4 einen auf der selben Welle sitzenden Kompressorrotor 17 anzutreiben.

Um die Bewegung bzw. die Lage der Leitschaufeln 7 zu steuern, ist eine Betätigungseinrichtung 11 vorgesehen. Diese kann an sich beliebig ausgebildet sein, jedoch weist eine bevorzugte Ausführungsform ein Steuergehäuse 12 auf, das die Steuerbewegung eines an ihr befestigten Stößelgliedes 14 steuert, um dessen Bewegung auf einen hinter dem Schaufellagerring 6 gelegenen Verstellring 5 in eine leichte Drehbewegung desselben umzusetzen. Zwischen dem Schaufellagerring 6 und einem ringförmigen Teil 15 des Turbinengehäuses 2 wird ein Freiraum 13 für die Leitschaufeln 7 gebildet. Um diesen Freiraum 13 sichern zu können, weist der Schaufellagerring 6 einstückig geformte Abstandshalter 16 auf. Im Beispielsfalle sind drei Abstandshalter 16 in einem Winkelabstand von jeweils 120° am Umfang des Schaufellagerrings 6 angeordnet. Vom Prinzip her ist es jedoch möglich, mehr oder weniger derartige Abstandshalter 16 vorzusehen.

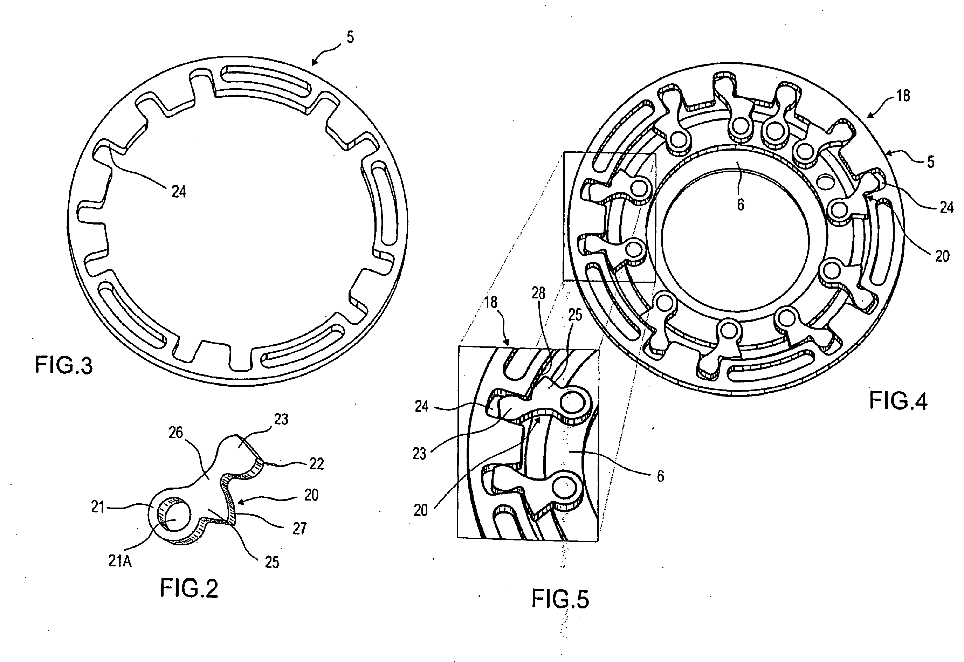

In Fig. 2 ist im Detail ein Schaufelhebel 20 repräsentativ für die bei der vorliegenden Erfindung verwendeten Schaufelhebel des erfindungsgemäßen Turboladers 1 dargestellt.

Der Schaufelhebel 20 ist ein ebenes Teil mit zwei Enden 21 und 22. Das Ende 21 weist eine Ausnehmung 21A auf, in die ein Ende einer zugeordneten Schaufelwelle 8 eingesetzt und verdrehfest fixiert werden kann. Diese Befestigung erfolgt üblicherweise durch Verschweißen.

Das andere Ende 22 wird von einem Hebelkopf 23 gebildet, der im Beispielsfall eine abgeflachte Stirnfläche aufweist, die jedoch alternativ auch abgerundet sein kann.

Der Hebelkopf 23 verjüngt sich in Richtung auf einen Mittelabschnitt 26, der gemäß der in Fig. 2 gewählten Darstellung auf seiner rechten Seite in eine Lagernase 25 einstückig übergeht, die eine bogensegmentförmige Anlagefläche 27 aufweist. Diese Anlagefläche 27 stützt sich im montierten Zustand an einer Gegenfläche des Verstellringes 28 für eine kombinierte Wälzgleitbewegung ab, wie sich dies aus der Darstellung des montierten Leitgitters 18 in den Fig. 4 und 5 im Einzelnen erschließt, was nachfolgend näher beschrieben wird.

In Fig. 3 ist eine Draufsicht auf den Verstellring 5 des erfindungsgemäßen Turboladers 1 dargestellt. Diese Draufsicht zeigt, dass der Verstellring 5 eine Mehrzahl von Eingriffsausnehmungen aufweist, von denen eine repräsentativ mit der Bezugsziffer 24 gekennzeichnet ist. Die Fig. 3 zeigt, dass der Verstellring 5 eine ungleichmäßige Teilung dieser Eingriffsausnehmungen 24 aufweist, wobei im Beispielsfalle vier Gruppen gebildet werden, von denen eine fünf benachbarte Eingriffsausnehmungen 24 und die drei anderen jeweils zwei benachbarte Eingriffsausnehmungen 24 umfassen.

Wie die Fig. 4 und 5 im Einzelnen zeigen, greifen im montierten Zustand des Leitgitters bzw. Leitapparates 18 die Hebelköpfe 23 der jeweiligen in diesen Figuren nicht sichtbaren Leitschaufeln 7 in die zugeordneten Eingriffsausnehmungen 24 des Verstellringes 5 ein. Insbesondere die Fig. 4 verdeutlicht hierbei, dass die Lagernasen 25 in unterschiedliche Richtungen weisen.

Vor allem die vergrößerte Darstellung der Fig. 5 zeigt am Beispiel des dort mit der Bezugsziffer 20 gekennzeichneten Schaufelhebels, dass sich die zugeordnete Lagernase 25 mit ihrer Lagerfläche 27 an einer Gegenfläche 28 des Verstellringes 5 abstützt, so dass dieser wälzkörperfrei radial gelagert werden kann, wobei sich durch die bogensegmentförmige Ausbildung der Anlagefläche 27 der Lagernase 25 eine kombinierte Wälzgleitbewegung ergibt.

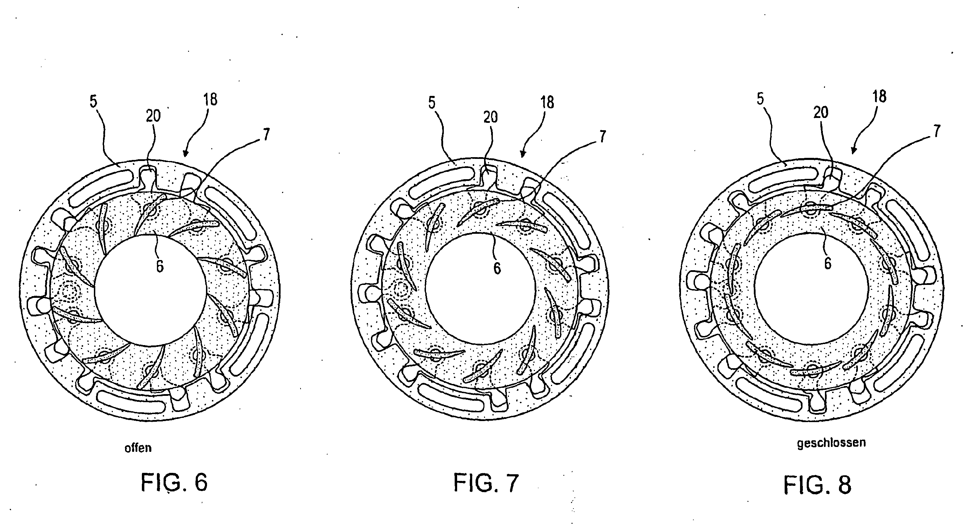

Die Fig. 6 bis 8 zeigen schließlich unterschiedliche Stellungen der Leitschaufel 7.

Fig. 6 zeigt eine geöffnete Schaufelstellung, während die Fig. 7 und 8 eine halbgeöffnete bzw. geschlossene Schaufelstellung der Leitschaufeln 7 verdeutlicht. Durch die leichte Verdrehung der Schaufelhebel 20 zueinander wird hierbei gewährleistet, dass sich theoretisch alle Hebel für bis zu 35° Auslenkwinkel bei Schaufelmittelstellung im Eingriff befinden.

Zur Ergänzung der Offenbarung wird explizit auf die zeichnerische Darstellung der Erfindung in den Fig. 1 bis 8 verwiesen.

### Bezugszeichenliste

- 1: Turbolader
- 2: Turbinengehäuse
- 3: Kompressorgehäuse
- 4: Turbinenrotor
- 5: Verstellring
- 6: Schaufellagerring
- 7: Leitschaufeln
- 8: Schaufelwelle
- 9: Zuführkanal
- 10: Axialstutzen
- 11: Betätigungseinrichtung
- 12: Steuergehäuse
- 13: Freiraum für Leitschaufeln 7
- 14: Stößelglied
- 15: Ringförmiger Teil des Turbinengehäuses 2
- 16: Abstandshalter/Distanznocken
- 17: Kompressorrotor
- 18: Leitgitter/Leitapparat
- 19: Lagergehäuse
- 20: Schaufelhebel
- 21, 22: Enden von Schaufelhebel 20
- 21a: Ausnehmung
- 23: Hebelkopf
- 24: Eingriffsausnehmungen
- 25: Lagernasen
- 26: Mittelabschnitt
- 27: Anlagefläche
- 28: Gegenfläche

## Patentansprüche

1. Turbolader (1) mit variabler Turbinengeometrie (VTG)
- mit einem Turbinengehäuse (2) mit einen Zuführkanal (9) für Abgase;
- mit einem Turbinenrotor (4), der drehbar im Turbinengehäuse (2) gelagert ist; und
- mit einem Leitgitter (18),
• das den Turbinenrotor (4) radial außen umgibt,
• das einen Schaufellagerring (6) aufweist,
• das eine Mehrzahl von Leitschaufeln (7) aufweist, die jeweils eine im Schaufellagerring (6) gelagerte Schaufelwelle (8) aufweisen, und
• das einen Verstellring (5) aufweist, der mit den Leitschaufeln (7) über zugeordnete, an den Schaufelwellen (8) an einem ihrer Enden (21) befestigte Schaufelhebel (20) in Wirkverbindung steht, wobei jeder Schaufelhebel (20) am anderen Ende (22) einen Hebelkopf (23) aufweist, der mit einer zugeordneten Eingriffsausnehmung (24) des Verstellrings (5) in Eingriff bringbar ist,
**dadurch gekennzeichnet,**
- **dass** jeder Schaufelhebel (20) asymmetrisch aufgebaut ist und nur auf einer Seite eines Mittelabschnitts (26) eine bogensegmentförmige Lagernase (25) aufweist, die in der gleichen Ebene wie der Hebelkopf (23) angeordnet ist, und
- **dass** die Teilung der Eingriffsausnehmungen (24) des Verstellringes (5) ungleichmäßig ist.

2. Turbolader nach Anspruch 1, **dadurch gekennzeichnet, dass** die Schaufelhebel (20) mit in unterschiedliche Richtung weisenden Lagernasen (25) in die zugeordneten Eingriffsausnehmungen (24) des Verstellrings (5) eingreifen.

3. Verstellring (5) für einen Turbolader nach Anspruch 1 (1) mit variabler Turbinengeometrie (VTG)
- mit einer Mehrzahl von sich zum Innenumfang hin öffnenden Eingriffsausnehmungen (24) zur Aufnahme von Hebelköpfen (23) zugeordneter Schaufelhebel (20),
**dadurch gekennzeichnet,**
- **dass** die Teilung der Eingriffsausnehmungen (24) über den Umfang des Verstellrings (5) ungleichmäßig ist.

## Claims

1. Turbocharger (1) with variable turbine geometry (VTG)
- having a turbine housing (2) with a supply duct (9) for exhaust gases;
- having a turbine rotor (4) which is rotatably mounted in the turbine housing (2); and
- having a guide grate (18),
• which surrounds the turbine rotor (4) radially at the outside,
• which has a blade mounting ring (6),
• which has a plurality of guide blades (7) which have in each case one blade shaft (8) which is mounted in the blade mounting ring (6), and
• which has an adjusting ring (5) which is operatively connected to the guide blades (7) by means of assigned blade levers (20), which are fastened to the blade shafts (8) at one of their ends (21), with each blade lever (20) having, at the other end (22), a lever head (23) which can be placed in engagement with an associated engagement recess (24) of the adjusting ring (5),
**characterized**
- **in that** each blade lever (20) is of asymmetrical design and has an arc-segment-shaped bearing lug (25) only on one side of a central section (26), which bearing lug (25) is arranged in the same plane as the lever head (23), and
- **in that** the pitch of the engagement recesses (24) of the adjusting ring (5) is non-uniform.

2. Turbocharger according to Claim 1, **characterized in that** the blade levers (20) engage with bearing lugs (25), which point in different directions, into the associated engagement recesses (24) of the adjusting ring (5).

3. Adjusting ring (5) for a turbocharger according to Claim 1 (1) with variable turbine geometry (VTG)
- having a plurality of engagement recesses (24), which open in the direction of the inner periphery, for holding lever heads (23) of associated blade levers (20),
**characterized**
- **in that** the pitch of the engagement recesses (24) over the periphery of the adjusting ring (5) is non-uniform.

## Revendications

1. Turbocompresseur (1) comprenant une géométrie de turbine variable (GTV), comprenant :
- un carter de turbine (2) avec un canal d'alimentation (9) pour les gaz d'échappement ;
- un rotor de turbine (4) qui est supporté à rotation dans le carter de turbine (2) ; et
- une grille directrice (18),
- qui entoure radialement à l'extérieur le rotor de turbine (4),
- qui présente une bague de palier d'aube (6),
- qui présente une pluralité d'aubes directrices (7) qui présentent à chaque fois un arbre d'aube (8) supporté dans la bague de palier d'aube (6), et
- qui présente une bague de réglage (5) qui est en liaison fonctionnelle avec les aubes directrices (7) par le biais de leviers d'aubes (20) associés, fixés au niveau des arbres d'aubes (8) à l'une de leurs extrémités (21), chaque levier d'aube (20) présentant à l'autre extrémité (22) une tête de levier (23) qui peut être amenée en prise avec un évidement d'engagement associé (24) de la bague de réglage (5),
**caractérisé en ce que**
- chaque levier d'aube (20) est construit de manière asymétrique et présente seulement d'un côté d'une portion centrale (26) un nez de palier (25) en forme de segment d'arc qui est disposé dans le même plan que la tête de levier (23), et
- la division des évidements d'engagement (24) de la bague de réglage (5) est irrégulière.

2. Turbocompresseur selon la revendication 1, **caractérisé en ce que** les leviers d'aubes (20) viennent en prise avec des nez de palier (25) tournés dans une direction différente dans les évidements d'engagement associés (24) de la bague de réglage (5).

3. Bague de réglage (5) pour un turbocompresseur (1) selon la revendication 1, comprenant une géométrie de turbine variable (GTV), comprenant
- une pluralité d'évidements d'engagement (24) s'ouvrant vers la périphérie intérieure pour recevoir des leviers d'aubes (20) associés à des têtes de levier (23),
**caractérisée en ce que**
- la division des évidements d'engagement (24) sur la périphérie de la bague de réglage (5) est irrégulière.
